**Europäisches Patentamt**

**European Patent Office**

**Office européen des brevets**

(19)

(11) Veröffentlichungsnummer : **0 075 807**
**B1**

(12) **EUROPÄISCHE PATENTSCHRIFT**

(45) Veröffentlichungstag der Patentschrift :
03.12.86

(51) Int. Cl.⁴ : **B 60 K 5/12**, F 16 F 1/38,
F 16 F 15/08

(21) Anmeldenummer : 82108613.9

(22) Anmeldetag : 17.09.82

(54) Elastisches Lager.

(30) Priorität : 19.09.81 DE 3137343

(43) Veröffentlichungstag der Anmeldung :
06.04.83 Patentblatt 83/14

(45) Bekanntmachung des Hinweises auf die Patenterteilung : 03.12.86 Patentblatt 86/49

(84) Benannte Vertragsstaaten :
AT DE FR GB IT

(56) Entgegenhaltungen :
EP-A- 0 025 459
AT-B- 317 696
AT-B- 338 631
DD-A- 137 467
DE-A- 2 816 742
DE-A- 2 915 811
US-A- 2 267 172

(73) Patentinhaber : Jörn, Frieda
Porschestrasse 10
D-7012 Fellbach (DE)

(72) Erfinder : Jörn, Raoul
(verstorben)
D-8992 Hengnau (DE)

(74) Vertreter : Neubauer, Hans-Jürgen, Dipl.-Phys.
Fauststrasse 30
D-8070 Ingolstadt (DE)

Jouve, 18, rue St-Denis, 75001 Paris, France

**Beschreibung**

Die Erfindung betrifft eine Kombination bestehend aus einem elastischen Lager, einer Abstützung und einem zu lagernden Teil, insbesondere aus einem Motorlager, einer Karosserie und einem Motor nach dem Oberbegriff des Anspruchs 1.

Ein bekanntes Motorlager (DE-A-2 915 811) besteht aus einem Gummimetallteil und einer rohrförmigen, zylindrischen und mit der Abstützung oder dem zu lagernden Teil verbundenen Aufnahme. Das Gummimetallteil wird im fertig vulkanisierten Zustand unter Vorspannung radial zusammengepreßt und in die Aufnahme axial eingedrückt. Das Gummimetallteil besteht aus einem inneren und aus äußeren Metallteilen und zwei dazwischen festhaftend einvulkanisierten und symmetrisch gegenüberliegenden Gummikörpern, wobei das äußere Metallteil aus zwei Halbschalen gebildet ist und das innere Metallteil einen rhombischen oder ovalen Querschnitt aufweist. Die Halbschalen verlaufen im Bereich der einvulkanisierten Gummikörper im gleichen Abstand von den Außenflächen des inneren Metallteils. Beide Halbschalen weisen einen zylindrischen Teilbereich auf, mit dem Sie im eingedrückten Zustand flächig an der Innenfläche der zylindrischen Aufnahme anliegen. Die Achse der zylindrischen Aufnahme bzw. des Gummimetallteils liegt horizontal.

Das bekannte Motorlager ist für eine Reihe von Anwendungsfällen, insbesondere als Motorlager, in der Längsrichtung zu hart und erlaubt keine Feinabstimmung zur Berücksichtigung theoretisch schwer erfaßbarer Schwingungserregungen, die beispielsweise dadurch auftreten, daß der Schwerpunkt des Motors und des Getriebes eines Kraftfharzeugs in der Regel in der Höhe versetzt liegen, wodurch die Hauptträgheitsachse nicht horizontal verläuft, sondern zur Kurbelwellenachse geneigt ist. Dadurch treten erregende Hochdrehschwingungen als vertikale Komponente der erregenden Längsschwingung auf. Ferner können Hochdrehschwingungen auch im Getriebe erregt werden. Dabei ist zu berücksichtigen, daß diese Erregungen bei Verwendung verschiedener Getriebe (z. B. bei Omnibussen) unterschiedlich sein können und schwer zu erfassen sind. Die Eigenfrequenzen der Hochdrehschwingungen liegen meist relativ hoch und oft über den Erregerfrequenzen. In diesem sehr häufig auftretenden Fall werden die erregenden Hochdrehschwingungen nicht überkritisch aufgenommen und es erfolgt für diese nur eine ungenügende Schwingungs- und Geräuschisolation.

Besondere Schwierigkeiten entstehen aber dadurch, daß der Zentralpunkt der Hochdrehschwingung oft nicht mit dem Massenschwerpunkt des Motor-Getriebe-Systems übereinstimmt. Auch erregende Seitenkräfte (z. B. bei V-Motoren) gehen meist nicht durch den in Folge der Getriebemasse verschobenen Massenschwerpunkt. Es entstehen daher gekoppelte Schwingungen, d. h., statt nur einer Eigendrehschwingung um die Schwerpunkt-Hochachse treten zwei gekoppelte Drehschwingungen um zwei vor und hinter dem Massenschwerpunkt liegende Drehachsen auf. Diese gekoppelten Drehschwingungen, die in Folge der relativ großen Federhärte in der Drehrichtung meist nicht überkritisch liegen, sind schwer zu beseitigen und führen zur Schwingungs- und Geräuschübertragung.

Bei einem bestimmten Fahrzeugtyp, dem in der Regel auch ein bestimmter Typ eines Motorlagers zugeordnet ist, kann normalerweise zwischen unterschiedlichen Motoren und unterschiedlichen Zusatzaggregaten und Getriebeausführungen gewählt werden. Jeder dieser unterschiedlichen Kombinationen bedingt unterschiedliche Eigenschwingungen und Schwingungsanregungen, die mit dem bekannten Motorlager nur global und ohne Feinabstimmung berücksichtigt werden können.

Weiter hat sich in diesem Zusammenhang gezeigt, daß die Annahme, ein Motorlager müßte in der vertikalen und in der seitlichen Richtung zur überkritischen Aufnahme der Hochschwingungen und der Längsdrehschwingungen weich, aber in der Längsrichtung zur Stabilisierung des Motors bei Brems- und Beschleunigungsvorgängen hart sein, nicht genügt. So kann zwar eine optimale Auslegung des bekannten Motorlagers für Vertikal- und Querschiebeschwingungen erzielt werden, aber Hochdrehschwingungen werden durch die Härte des Lagers in Längsrichtung erheblich behindert.

Ein weiteres, bekanntes elastisches Lager (AT-B-338 631), das ebenfalls bevorzugt als Motorlager eingesetzt werden soll, besteht aus einem äußeren Aufnahmeauge mit planen inneren Abstützflächen für vier Gummikörper eines Gummimetallelements. Die Lagerachse liegt auch bei diesem Motorlager horizontal. Auch dieses Lager hat im wesentlichen die vorbeschriebenen Eigenschaften, so daß es für eine Reihe von Anwendungsfällen nicht optimal einsetzbar ist.

Aufgabe der Erfindung ist es demgegenüber, eine gattungsgemäße Kombination bestehend aus einem elastischen Lager, einer Abstützung und einem zu lagernden Teil, insbesondere aus einem Motorlager, einer Karosserie und einem Motor, so weiterzubilden, daß bei vertikal guten Trag- und Belastungseigenschaften eine einfache Abstimmung auf Schwingungserregungen möglich wird, insbesondere eine verbesserte Schwingungs- und Geräuschisolierung bei der Lagerung eines Motors an einem Kraftfahrzeug erzielbar ist.

Diese Aufgabe wird mit den kennzeichnenden Merkmalen des Anspruchs 1 gelöst.

Gemäß Anspruch 1 liegt die Achse der zylindrischen Aufnahme vertikal. Die Haftflächen der Gummikörper verlaufen in ihrer gesamten Länge parallel zur Achse der zylindrischen Aufnahme.

Die zwei symmetrisch gegenüberliegenden, horizontal vorwiegend auf Druck beanspruchten Gummikörper sind in ihrer Mitte durch einen vertikalen Spalt in jeweils zwei Teile getrennt. Durch die Einbringung dieses Spaltes wird die vertikale Tragfähigkeit des Lagers, insbesondere für die Lagerung relativ schwerer Motoren, nur wenig beeinflußt, das Lager selbst ist jedoch in Fahrzeuglängsrichtung nicht mehr so hart, so daß insbesondere Hochdrehschwingungen günstiger aufgenommen werden. Weiter kann durch ein Einpressen des Gummimetallteils in das Aufnahmeauge in unterschiedlichen Winkellagen eine Feinabstimmung und Anpassung an die jeweiligen Gegebenheiten, insbesondere an den Ausrüstungsgrad eines Kraftfahrzeugs vorgenommen werden. Bezüglich der Entkopplung der vorbeschriebenen Hochdrehschwingungen bietet das erfindungsgemäße Lager die Möglichkeit, durch eine Drehung um seine Hochachse zu bewirken, daß der Zentralpunkt der in Drehrichtung tangential verlaufenden Federkonstanten mit dem Massenschwerpunkt des Motor-Getriebe-Systems zusammenfällt. Mit dem erfindungsgemäßen Lager kann somit eine langsame Eigenschwingung um die Hochdrehachse erzielt werden und damit ein überkritisches Verhalten. Gleichzeitig werden die Drehschwingungen entkoppelt und die Anzahl der Resonanzgebiete herabgesetzt. Es wird ein optimales Schwingungs- und Geräuschverhalten erzielt.

Mit den Merkmalen des Anspruchs 2 wird eine vergrößerte Tragfähigkeit in vertikaler Richtung erreicht.

Nach Anspruch 3 soll die rohrförmige Aufnahme mit der Abstützung fest verbunden sein, z. B. ein Rohrstück als Aufnahmeauge an Karosserieteilen im Motorraum angeschweißt sein. Das Aufnahmegehäuse könnte jedoch auch ein an der Karosserie gepreßtes Blechteil sein. Dadurch ergibt sich eine kostengünstige Ausführung im Kraftfahrzeugbau, da keine Schraubverbindungen notwendig sind und der Anschraubvorgang entfallen kann. Die Gummimetalle können dabei je nach Ausrüstungsgrad des Fahrzeugs zu einer Feineinstellung in unterschiedlichen, dem Fahrzeugausrüstungsgrad zugeordneten Winkelstellungen eingepreßt werden.

Anhand der Zeichnung wird die Erfindung mit weiteren Merkmalen, Einzelheiten und Vorteilen an drei Ausführungsbeispielen erläutert.

Es zeigen

Figur 1 ein Gummimetallteil eines erfindungsgemäßen Lagers im vertikalen Längsschnitt,

Figur 2 das gleiche Gummimetallteil im vertikalen Querschnitt,

Figur 3 das gleiche Gummimetallteil in der Draufsicht,

Figur 4 ein Lagergehäuse im eingebauten Zustand, in das das radial vorgespannte Gummimetallteil eingepreßt ist, im Längsschnitt,

Figur 5 das Lagergehäuse nach Fig. 4 in der Draufsicht,

Figur 6 Längsschnitt durch ein Lager an einer Konsole,

Figur 7 Draufsicht auf das Lager nach Fig. 6,

Figur 8 Lager in der Ausführung als Motorlager in einem Pkw, dessen Gehäuse direkt auf einen Querträger aufgeschweißt ist, im Längsschnitt,

Figur 9 Lager nach Fig. 8 in der Draufsicht,

Figur 10 auf Lagern abgestützte Motor-Getriebe-Einheit in der Seitenansicht,

Figur 11 Motor-Getriebe-Einheit nach Fig. 10 in der Draufsicht.

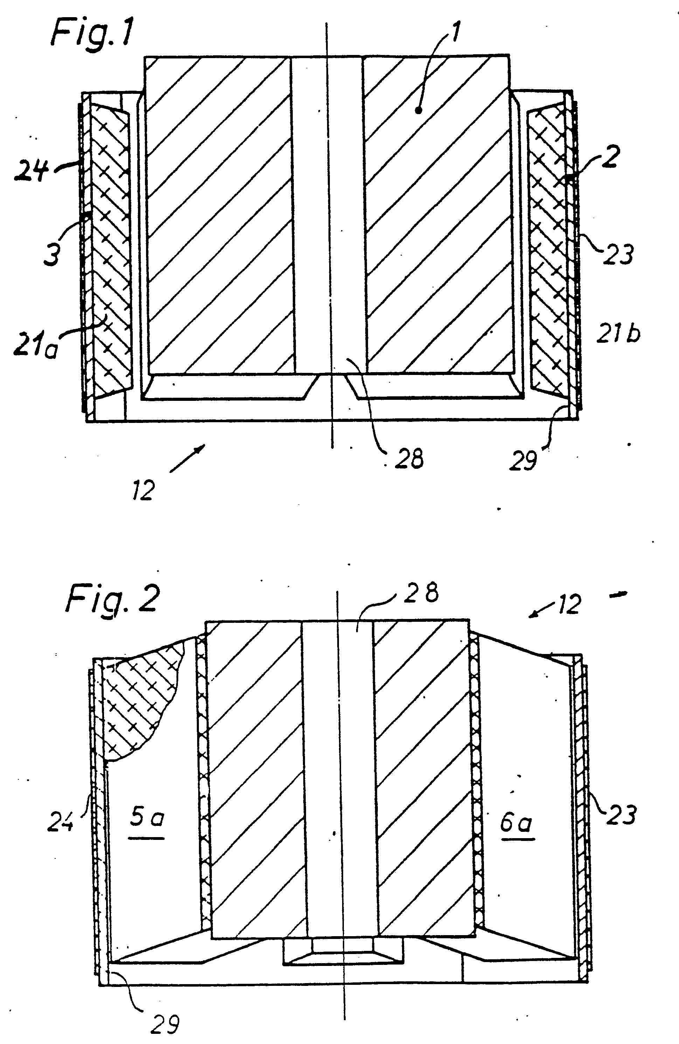

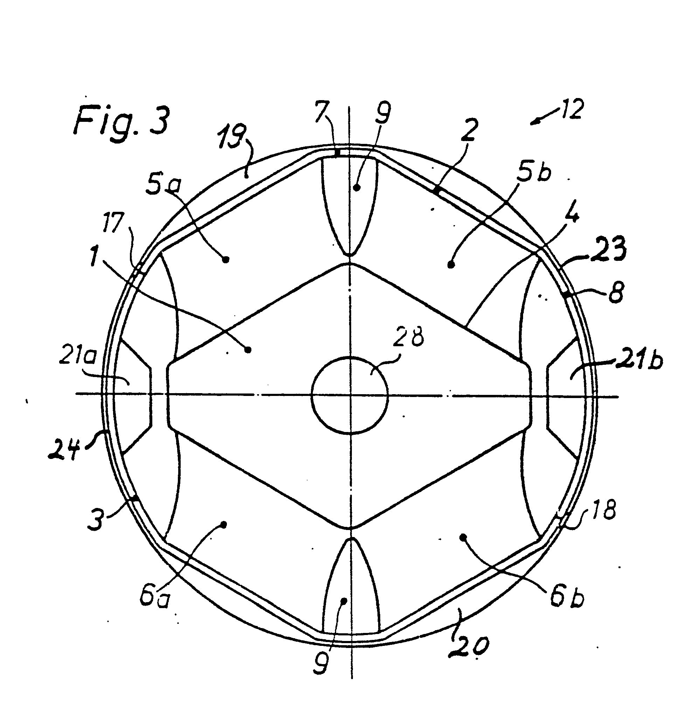

Die Figuren 1, 2 und 3 zeigen ein Gummimetallelement 12 im vertikalen Längsschnitt, im vertikalen Querschnitt und in der Draufsicht. Ein inneres Metallteil 1 mit rhombischem Horizontalquerschnitt ist dabei von zwei äußeren Halbschalen 2, 3, die vorzugsweise aus Blech gefertigt sind, umgeben. Zwischen dem Metallteil 1 und den Halbschalen 2, 3 sind Gummikörper 5, 6 einvulkanisiert. Das Metallteil 1 enthält in der Mitte eine vertikal durchgehende Bohrung 28 zur Aufnahme eines nicht dargestellten Befestigungsbolzens. Die Halbschalen 2, 3 sind im wesentlichen zylindrisch geformt und bestehen aus Zylinderabschnitten und geraden, in der Draufsicht als Kreissehnen erscheinenden Flächenteilen, die parallel zu den Seitenflächen des Metallteils 1 verlaufen. Zwischen den geraden Flächen an den Halbschalen und den parallel dazu liegenden Flächen des Metallteils 1 sind die gegenüberliegenden Gummikörper 5, 6 festhaftend einvulkanisiert und durch einen in ihrer Mitte verlaufenden vertikal durchgehenden Spalt 9 in je zwei Teile 5a, 5b und 6a, 6b getrennt. Die Gummikörper 5a, 5b und 6a, 6b haben so in etwa den gleichen Durchmesser und in einem horizontalen Querschnitt eine Querschnittsfläche in der Art eines Parallelogramms. In den Figuren 1, 2, 3 ist das Gummimetallteil 12 bereits im vorgespannten Zustand gezeichnet, d. h. in dem Zustand, in dem radial die Gummikörper 5, 6 zusammengepreßt sind und das Gummimetallteil 12 zum Einbringen in eine Aufnahme vorbereitet wurde. Im unbelasteten Zustand würden sich die Gummiteile 5, 6, die im wesentlichen auf Druck beansprucht sind, ausdehnen (in Fig. 3 nach oben und unten), so daß an den Stellen 17, 18 zwischen den Halbschalen 2, 3 ein vertikal verlaufender Spalt entsteht und diese auseinanderklaffen. Durch die Kraftwirkung der Gummikörper 5, 6 radial nach außen im zusammengepreßten Zustand wird das Gummimetallteil 12 nach dem Einbringen in ein Gehäuse in diesem fest fixiert und gehalten. An den geraden Flächen der Halbschalen 2, 3 sind nach außen hin Gummipolster 19, 20 angebracht, die in der Form so gestaltet sind, daß das Gummimetallteil 12 im vorgespannten Zustand insgesamt eine zylindrische Form einnimmt. Dazu sind auch die Halbschalen 2, 3 so geformt, daß ihre radial äußersten Punkte, beispielsweise die Punkte 7 und 8, auf einem Kreiszylinder liegen. Die Gummipolster 19, 20 stützen die Halbschalen 2, 3 im eingebauten Zustand gegen die Aufnahme in einem Gehäuse ab. An der Innenwand der Halbschalen 2, 3 sind gegenüber der Schmalseite des Metallteils 1 Anschlagpuffer 21a, 21b in der Form vertikal verlaufender Gummileisten angebracht. Diese Anschlagpuffer 21a und 21b begrenzen elastisch die Federwege des Metallteils 1 in der Querrichtung, in der die größte Weichheit vorhanden ist. Damit werden Anschläge mit progressiver Federcharakteristik geschaffen, wobei die Federcharakteristik durch unterschiedliche Formgebung und Höhe der Gummileisten in weiten Grenzen varierbar ist. Die kreiszylindrischen Flächen der Halbschalen 2, 3 sind mit einem angehafteten Gummifilm 23, 24 versehen, der die Haftreibung im eingepreßten Zustand erhöht.

Fig. 1 und Fig. 2 zeigen das Gummimetallelement 12 in seiner vertikalen Einbaulage. Hieraus ist zu ersehen, daß die seitlichen Halbschalen 2, 3 nach unten über die Gummikörper 5, 6 und das Metallteil 1 hervorragen und eine Art umlaufenden Bund 29 bilden. Wie insbesondere aus Fig. 2 zu ersehen ist, verlaufen die Gummikörper 5, 6 von ihrer Haftungsfläche an den Halbschalen 2, 3 schräg nach oben zu den Haftungsflächen am Metallteil 1. Die Funktion des Gummimetallteils 12 soll weiter unten im eingebauten Zustand beschrieben werden.

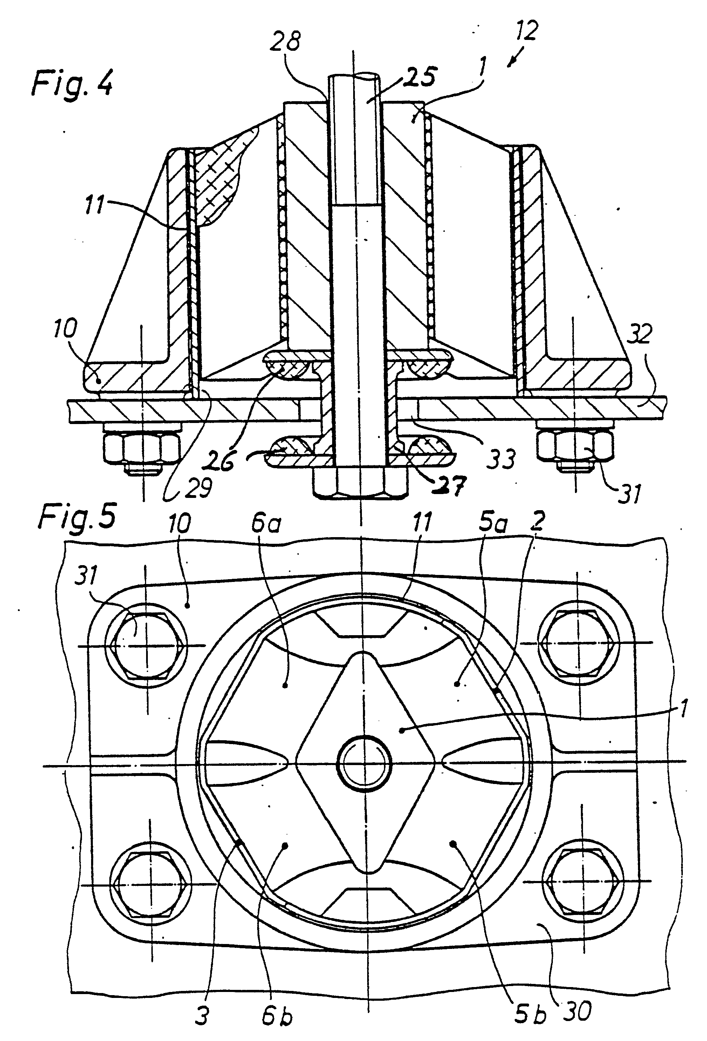

Die Fig. 4 und 5 stellen ein Gummiteil 12 der vorbeschriebenen Art in einem Gehäuse 10 mit einer rohrförmigen Aufnahme 11 dar. Das Gehäuse 10 ist so aufgebaut, daß eine Bodenplatte 30 ein senkrecht zu ihr stehendes Rohrstück 11 trägt, wobei die Bodenplatte 30 im Bereich des Rohrstücks 11 ausgespart ist und somit ein freier Durchbruch in der Weite des Rohrstücks 11 durch die Bodenplatte entsteht. Die Bodenplatte 30 ist mit Hilfe von vier Schrauben 31 an einer Trägerplatte 32 verschraubt. Die Trägerplatte 32 weist vertikal unter der Lagermitte einen kreisförmigen Durchbruch 33 auf. Durch die vertikale Bohrung 28 des Metallteils 1 und durch den Durchbruch 33 ist ein Befestigungsbolzen 25 für eine Motorpratze in der Form einer Schraube von unten her eingesteckt. Auf Scheiben angeordnete Anschlagpuffer 26 umgreifen den Durchbruch 33 von beiden Seiten, werden durch ein Distanzrohr 27 auf Abstand gehalten und mit Hilfe des Befestigungsbolzens 25 verschraubt. Die Weite des Durchbruchs 33 ist so dimensioniert, daß auch bei maximalem horizontalen Federweg des Gummimetallteils 12 das Distanzrohr 27 nicht an die Ränder des Durchbruchs 33 schlägt. Die Anschlagpuffer 26 dienen zur axialen Federbegrenzung bei extrem hohen und selten auftretenden Stößen in axialer Richtung des Lagers. Dabei verhindern die aufvulkanisierten Gummiwülste der Anschlagpuffer 26 einen metallischen Anschlag des Metallteils 1 nach unten bzw. verhindern eine Überbeanspruchung der Gummikörper 5, 6 bei einem Ausfedern nach oben und bieten eine weitere Dämpfung.

In Fig. 4 ist das Lager bereits in dem Zustand gezeichnet, in dem das Lagerteil, insbesondere ein Motor, bereits aufgesetzt (nicht gezeichnet) und mit dem Befestigungsbolzen verbunden ist. Durch das Gewicht des Motors wird das Gummimetallelement 12 in vertikaler Richtung nach unten bereits etwas verformt und nimmt die in Figur 4 gezeichnete Lage ein, in der die Trägerplatte 32 bzw. der Durchbruch 33 etwa in der Mitte zwischen den Anschlagpuffern 26 zu liegen kommt. Die Ein- und Ausfederwege sind damit in vertikaler Richtung in etwa gleich. Um hier eine dem Gewicht des Motors entgegenwirkende Vorspannung der Gummiteile zu erhalten, können diese im umbelasteten Zustand schräger nach oben, als in Fig. 4 gezeichnet, stehen.

Auf Fig. 4 ist auch zu ersehen, daß die Halbschalen 2, 3 auf der Trägerplatte 32 mit dem Bund 29 aufsitzen, so daß die erst weiter oben angehafteten Gummikörper 5, 6 nach unten einen freien Federweg erhalten. Durch das Aufsitzen der Halbschalen 2, 3 an der unteren Trägerplatte 32 ist auch gewährleistet, daß das eingepreßte Gummimetallteil 12 nicht bei Extrembelastungen nach unten aus seiner Aufnahme, dem Rohrstück 11, durchrutschen kann.

Das hier gezeigte Lager arbeitet wie folgt : Zur Montage des Gummimetallteils 12 wird dieses radial zusammengepreßt und in das Rohrstück 11 entweder vor Montage des Gehäuses 10 oder nach dessen Montage an der Trägerplatte 32 eingedrückt. Die Einbaurichtung des Gummimetallteils 12 ist dabei im wesentlichen so gewählt, daß die Gummikörper 5, 6 in Längsrichtung des Fahrzeugs weisen und die dagegen weichere Querrichtung zur Aufnahme der Hochdrehschwingungen in der Querrichtung des Fahrzeugs zeigt. Auf die mit dem Lager einfach mögliche Feinabstimmung wird weiter unten eingegangen. Anschließend wird der Motor aufgesetzt, so daß das Lager den in Fig. 4 gezeigten Zustand einnimmt. Extreme vertikale Bewegungen werden dabei durch die Anschlagpuffer 26 aufgefangen. Horizontale Bewegungen werden in Längsrichtung im wesentlichen durch Druckbelastung, in Querrichtung durch Schubbelastung der Gummikörper 5, 6 aufgenommen. Der vertikale Spalt 9 in den Gummikörpern 5, 6 verkleinert dabei die Federkonstante in Längsrichtung.

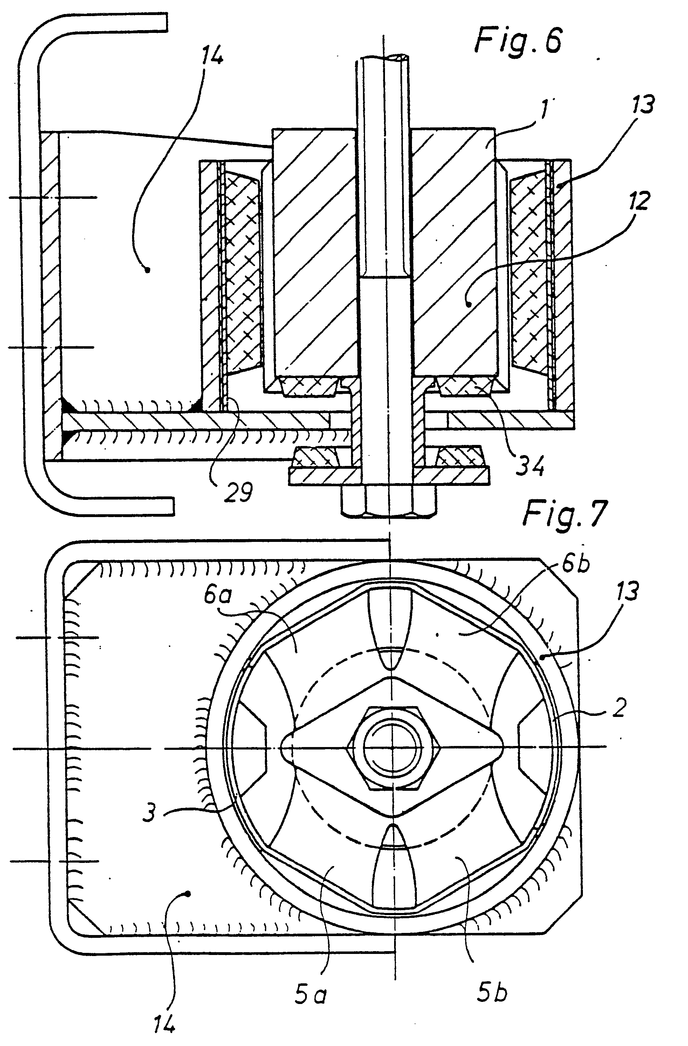

Die Fig. 6 und 7 zeigen eine weitere Ausführung, bei der die rohrförmige Aufnahme an einer fest mit einem Fahrzeugteil verbundenen Konsole durch Schweißverbindungen angebracht ist. Der Anschlagpuffer 34, der den maximalen vertikalen Federweg nach unten begrenzt, ist hier so ausgeführt, daß an der unteren Stirnseite des Metallteils 1 bereits ein Gummiwulst (34) anvulkanisierbar ist.

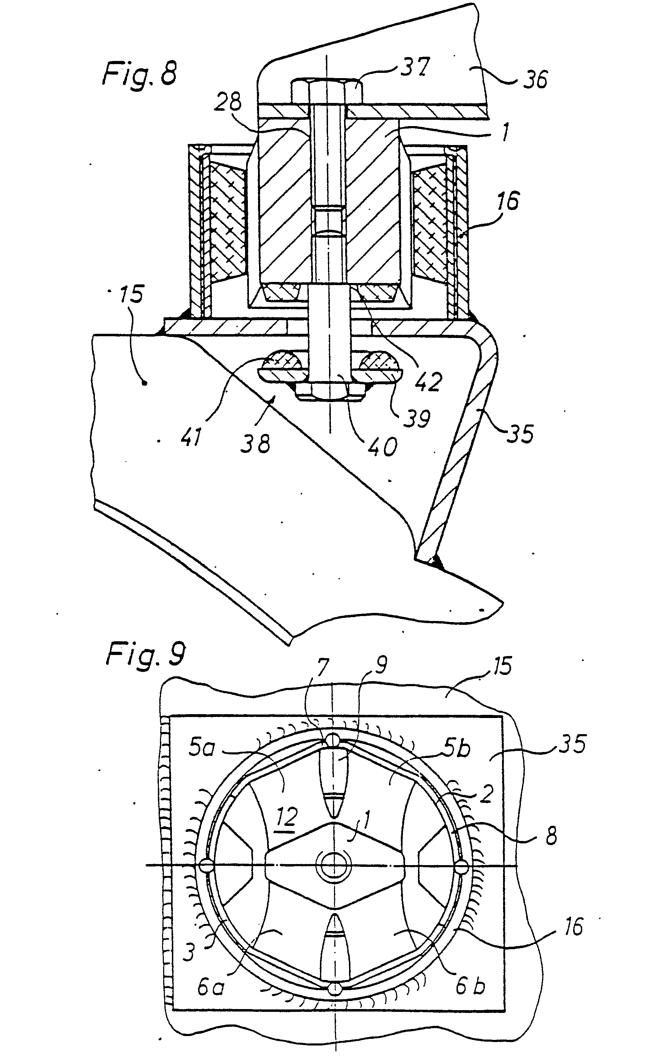

Die Fig. 8 und 9 zeigen eine weitere Ausführungsform, bei der auf einem Teil eines Fahrgestells 15 auf einem auf diesem Teil angeschweißten Blechträger 35 ebenfalls durch Schweißverbindung eine rohrförmige Aufnahme 16 angebracht ist. Diese Ausführung ist besonders für eine Großserienfertigung geeignet, wie sie im Pkw-Bau besteht. Die Lageraufnahmen werden dabei einfach in Rahmen- oder Trägerteile integriert und vorgefertigt. In der hier gezeigten Ausführung ist die vertikale Bohrung 28 im Metallteil 1 mit einem Gewinde versehen. Eine in Fig. 8 angedeutete Motorpratze 36 ist mit einer Schraube 37 von oben her direkt mit dem Metallteil 1 verschraubt. Der den vertikalen Ausfederweg nach oben begrenzende Anschlagpuffer 38 ist hier so ausgeführt, daß eine Scheibe 39 mit dem Kopf einer Schraube 40 verschweißt ist und die Scheibe 39 eine Gummiauflage 41 trägt. Die Schraube 40 ist nur am vorderen Teil mit einem Gewinde versehen und kann gegen einen dadurch gebildeten Anschlag 42 mit dem Metallteil 1 verschraubt werden. Der Abstand zwischen dem Anschlag 42 und der Gummiauflage 41 ist so bemessen, daß der erforderliche maximale Ausfederweg erhalten wird. Dadurch kann bei dieser Ausführung eine Distanzscheibe entfallen.

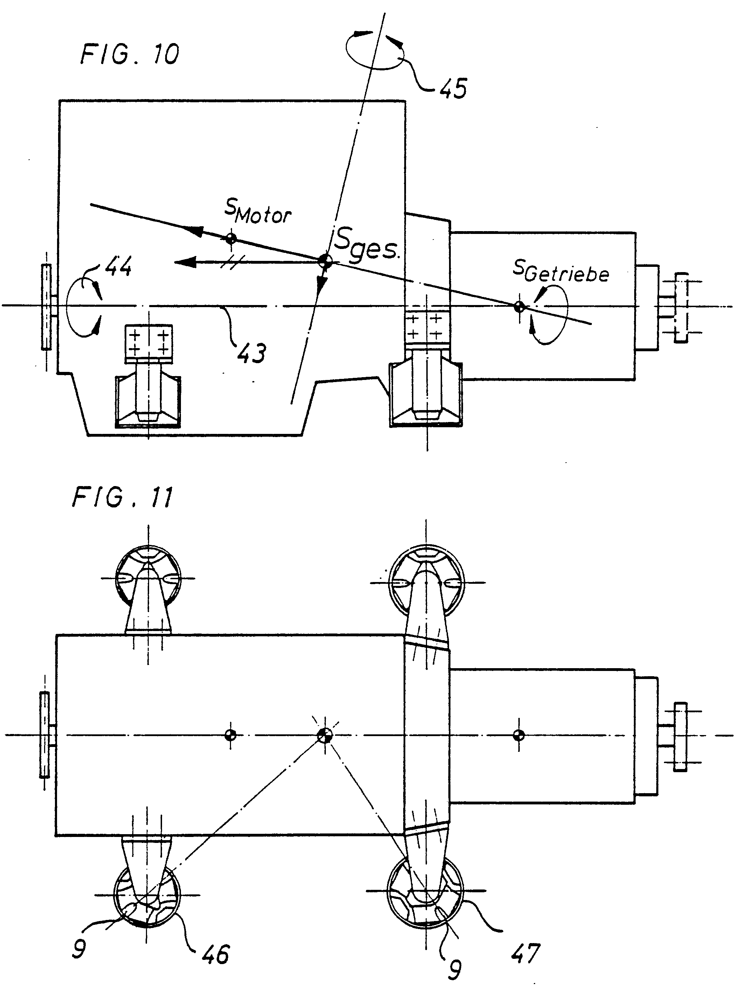

In Fig. 10 und 11 ist zur Veranschaulichung der Einstell- und Abstimmungsmöglichkeiten mit dem erfindungsgemäßen Lager eine auf vier Lagern abgestützte Motor-Getriebe-Einheit in der Seitenansicht und in der Draufsicht gezeigt. In Fig. 10 sind die Schwerpunkte des Motors ($S_{Motor}$) und des Getriebes ($S_{Getriebe}$) eingezeichnet. Der Schwerpunkt der gesamten Einheit ($S_{ges.}$) liegt auf der Verbindungslinie zwischen den beiden Einzelschwerpunkten im rechten Bereich des Motors. Mit einer strichpunktierten Linie 43 ist die Lage der Kurbelwelle angedeutet, die mit den Pfeilen 44 angedeutete Drehbewegungen ausführt. Insbesondere beim schnellen Hochdrehen des Motors und der damit verbundenen schnellen Drehzahländerung der Kurbelwelle werden Momente auf die gesamte Einheit übertragen, die durch die Lager aufgenommen werden müssen. Durch die nicht parallel zur Kurbelwelle liegende Hauptträgheitsachse zwischen den Einzelschwerpunkten wird hier zusätzlich eine Schwingung um eine Hochachse angeregt, wie sie durch die Pfeile 45 angedeutet ist. Diese Schwingungsanregungen um eine Hochachse sind theoretisch schwierig zu erfassen und wurden bisher meist nicht oder nur sehr global berücksichtigt. Beim Einbau unterschiedlicher Motoren bzw. Getriebe in ein und dasselbe Fahrzeug ist zudem die Lage der Hauptträgheitsachse jedesmal dann geändert, wenn die Schwerpunktslagen verändert werden.

Eine Feinabstimmung und optimale Anpassung der Federkonstanten des gezeigten Lagers kann hier einfach durch unterschiedliche Drehungen des Gummimetallteils 12 erreicht werden. Diese Einstellung ist theoretisch nur schwer vorhersagbar und muß in der Regel durch Ausprobieren in Verbindung mit den erforderlichen Messungen gefunden werden. In Fig. 11 sind beispielsweise die beiden linken Lager 46, 47 so eingestellt, daß ihre Spalte 9 auf den Gesamtschwerpunkt zu gerichtet sind. Ein besonderer Vorteil ist dabei, daß die Gummimetallteile 12 in jeder beliebigen Winkelposition eingepreßt werden können.

Zusammenfassend wird festgestellt, daß hier ein Lager geschaffen wurde, das sehr universell einsetzbar, preiswert zu fertigen und zu montieren ist und mit dem eine kontinuierliche Anpassung und Feinabstimmung an die jeweils vorhandenen Gegebenheiten und damit eine Verbesserung der Schwingungsisolierung möglich ist.

## Patentansprüche

1. Kombination bestehend aus einem elastischen Lager, einer Abstützung (15, 35, 14, 30) und einem zu lagernden Teil, insbesondere aus einem Motorlager, einer Karosserie und einem Motor, wobei das elastische Lager aus einem Gummimetallteil (12) und einer rohrförmigen, zylindrischen und mit der Abstützung (15, 35, 14, 30) oder dem zu lagernden Teil verbundenen Aufnahme (11, 13, 16) besteht, das Gummimetallteil (12) im fertig vulkanisierten Zustand unter Vorspannung radial zusammenpreßbar und in die Aufnahme (11, 13, 16) axial eindrückbar ist, das Gummimetallteil (12) aus einem inneren (1) und aus äußeren Metallteilen, und zwei dazwischen festhaftend einvulkanisierten und symmetrisch gegenüberliegenden Gummikörpern (5, 6) besteht, wobei das äußere Metallteil aus zwei Halbschalen (2, 3) gebildet ist und das innere Metallteil (1) einen rhombischen oder ovalen Querschnitt aufweist, und die Halbschalen (2, 3) im Bereich der einvulkanisierten Gummikörper (5, 6) stets im gleichen Abstand von den Außenflächen des inneren Metallteils verlaufen, und beide Halbschalen einen zylindrischen Teilbereich aufweisen, mit dem sie im eingedrückten Zustand flächig an der Innenfläche der Aufnahme anliegen, dadurch gekennzeichnet, daß die Achse der zylindrischen Aufnahme (11, 13, 16) vertikal liegt, daß die Haftflächen der Gummikörper (5, 6) in ihrer gesamten Länge parallel zur Achse der zylindrischen Aufnahme (11, 13, 16) verlaufen und daß die zwei symmetrisch gegenüberliegenden, horizontal vorwiegend auf Druck beanspruchten Gummikörper (5, 6) in ihrer Mitte durch einen vertikalen Spalt (9) in jeweils zwei Teile (5a, 5b und 6a, 6b) getrennt sind.

2. Elastisches Lager nach Anspruch 1, dadurch gekennzeichnet, daß die jeweils nebeneinander liegenden Gummikörper (5, 6) keilförmig zu ihrer mittleren Horizontalebene symmetrisch geneigt sind.

3. Elastisches Lager nach Anspruch 1 oder 2, dadurch gekennzeichnet, daß die rohrförmige Aufnahme (11, 13, 16) mit der Abstützung (15, 35, 14, 30) fest verbunden ist und das Gummimetallteil (12) in unterschiedlichen Winkelstellungen seiner Längsebene in die Aufnahme (11, 13, 16) einbringbar ist.

## Claims

1. Combination composed of an elastic bearing, a support (15, 35, 14, 30), and a part to be borne, in particular of a motor bearing, a car body, and a motor, where the elastic bearing consists of a rubber-metal part (12) and a tubular, cylindrical seat joined either to the support (15, 35, 14, 30) or to the part to be borne (11, 13, 16), the rubber-metal part (12), when prestressed, being capable of being radially compressed, and axially impressed into the seat (11, 13, 16), the rubber-metal part (12) composed of an inner (1) and outer metal parts and two adherently vulcanized-in, symmetrically opposing rubber bodies (5, 6), where the outer metal part is shaped out of two half-shells (2, 3), and the inner metal part (1) has a rhombic or oval diameter, and the half-shells (2, 3) in the region of the vulcanized-in rubber bodies (5, 6) always run at an equal distance from the outer surfaces of the inner metal part, and where the two half-shells form a cylindrical part of a sleeve with which they, when impressed, fit tight and flat to the inner face of the seat, characterized by the fact that the axis of the cylindrical seat (11, 13, 16) is vertical, the adherent faces of the rubber bodies (5, 6) run parallel at full length to the axis of the cylindrical seat (11, 13, 16), and the two symmetrically opposing, mainly compression stressed, rubber bodies (5, 6) are in their centre separate from one another in each two parts (5a, 5b and 6a, 6b) by a vertical slot (9).

2. Elastic bearing according to Claim 1, characterized by the fact that the two rubber bodies (5, 6) lying side by side are symmetrically inclined in wedge shape towards their central horizontal plane.

3. Elastic bearing according to Claims 1 or 2, characterized by the fact that the tubular seat (11, 13, 16) is fixedly joined to the support (15, 35, 14, 30), and that the rubber-metal part (12) can be inserted into the seat (11, 13, 16) in different angular positions of its longitudinal plane.

**Revendications**

1. Combinaison se composant d'un support élastique, d'un appui (15, 35, 14, 30) et d'un élément à supporter, en particulier d'un support de moteur, d'une carrosserie et d'un moteur, le support élastique se composant d'une pièce de caoutchouc-métal (12) et d'un logement tubulaire cylindrique (11, 13, 16) solidaire de l'appui (15, 35, 14, 30) ou de l'élément à supporter, la pièce de caoutchouc-métal (13) à l'état définitivement vulcanisé pouvant être comprimée radialement avec précontrainte et insérée axialement dans le logement (11, 13, 16), la pièce de caoutchouc-métal (12) se composant d'une partie métallique intérieure (1) et d'une partie métallique extérieure et de deux corps de caoutchouc (5, 6) fixés de manière adhérente entre celles-ci par vulcanisation et opposés symétriquement, la partie métallique extérieure étant formée de deux demi-cuvettes (2, 3) et la partie métallique intérieure (1) présentant une section losangique ou ovale, et les demi-cuvettes (2, 3) s'étendant constamment à la même distance des surfaces extérieures de la partie métallique intérieure dans la région des corps de caoutchouc (5, 6) fixés par vulcanisation, et les deux demi-cuvettes présentant une région partielle cylindrique par laquelle, en position insérée, elles s'appliquent sur la surface intérieure du logement, caractérisée en ce que l'axe du logement cylindrique (11, 13, 16) est vertical, en ce que les surfaces d'adhérence des corps de caoutchouc (5, 6) s'étendent, sur toute leur longueur, parallèlement à l'axe du logement cylindrique (11, 13, 16), et en ce que les deux corps de caoutchouc (5, 6) symétriquement opposés, principalement sollicités horizontalement à la pression, sont séparés en leur milieu en deux parties (5a, 5b et 6a, 6b) par une fente verticale (9).

2. Support élastique selon la revendication 1, caractérisé en ce que les corps de caoutchouc (5, 6) respectivement placés côté à côté sont inclinés en forme de coin, symétriquement par rapport à leur plan horizontal médian.

3. Support élastique selon la revendication 1 ou 2, caractérisé en ce que le logement tubulaire (11, 13, 16) est fixé rigidement à l'appui (15, 35, 14, 30) et la pièce de caoutchouc-métal (12) peut être insérée dans le logement (11, 13, 16) dans différentes positions angulaires de son plan longitudinal.

*Fig.1*

*Fig. 2*

Fig. 3

Fig. 4

*28* *25* *12* *1*

*11*

*10* *32*

*26* *33*

*29* *27* *31*

Fig. 5

*10* *6a* *11* *5a* *2*

*31*

*1*

*3* *6b* *5b* *30*

0 075 807

*Fig.6*

*Fig.7*

14 · 1 · 13 · 12 · 34 · 29

6a · 6b · 13 · 2 · 3 · 5a · 5b · 14

4

Fig. 8

Fig. 9

FIG. 10

$S_{Motor}$

$S_{ges.}$

$S_{Getriebe}$

44

43

45

FIG. 11

9

46

9

47